# EUROPÄISCHE PATENTSCHRIFT

(11) **EP 1 155 768 B1**
(45) Veröffentlichungstag und Bekanntmachung des Hinweises auf die Patenterteilung: **29.12.2004**
(21) Anmeldenummer: 01110209.2
(22) Anmeldetag: 25.04.2001
(51) Int. Cl.: B23K 26/34, C23C 24/10

(54) **Schneidkörper für Schneidwerkzeuge wie Trennscheiben**
Cutting element for cutting tools like cutting wheels
Element coupant pour des outils de coupe tels que des meules

(30) Priorität: 19.05.2000 DE 10024155
(43) Veröffentlichungstag der Anmeldung: 21.11.2001
(73) Patentinhaber: ROBERT BOSCH GMBH, 70442 Stuttgart (DE)
(72) Erfinder: Neubach, Stefan, Dipl.-Ing., 91126 Schwabach (DE)

(56) Entgegenhaltungen:
- DE-A- 19 520 149
- DE-A- 19 744 214
- US-A- 3 999 962

## Beschreibung

Die Erfindung betrifft einen Schneidkörper für Schneidwerkzeuge wir Trennscheiben, Bohrkronen, Schleifwerkzeuge oder dergleichen mit den Merkmalen des Oberbegriffs des Anspruchs 1.

Trennscheiben bestehen aus einem Grundkörper aus Stahl mit im wesentlichen kreisförmigen Außenumfang, sowie einer zentralen Bohrung zur Aufnahme an einem Schneidgerät. Die Trennscheiben sind außen durch regelmäßige Einkerbungen segmentiert, wobei auf den Segmenten Hartstoffe enthaltende Schneidkörper angeordnet sind. In jüngerer Zeit werden diese Schneidkörper mittels Laserstrahltechnik aufgeschmolzen. Aus der DE-A-195 20 149 ist ein solches Verfahren bekannt, bei dem Schneidkörper aus Bronze und Hartstoffen mittels eines gepulsten Nd:YAG-Lasers auf einen Grundkörper aufgeschmolzen werden. Aus der DE-A-197 44 214 ist es bekannt, Titan als benetzungsförderndes Mittel zur gleichmäßigeren Verteilung von Diamantkörnern in der Schmelze einzusetzen, sowie zwischen dem Grundkörper und dem Schneidkörper eine Zwischenschicht aus Kupfer vorzusehen, um die Haftfestigkeit des Schneidkörpers auf dem Grundkörper zu erhöhen.

Das Aufschmelzen der Schneidkörper hat gegenüber dem früher weit verbreiteten Verfahren des Aufsinterns einer Mischung aus Diamanten und Metallpulverpartikeln (Kobalt, Eisen oder Nickel) den Vorteil, daß die Metallmatrix eine wesentlich größere Haltekraft für die Diamanten aufweist. Als nachteilig wirkt sich bei dem Schmelzverfahren der Dichteunterschied des Hartstoffes (z.B. Diamant 3,5 g/cm³) und der Metallschmelze (z.B. Kupfer bei 1200° 7,85 g/cm³) aus.Durch Auftrieb und Schmelzbadkonvektion schwimmen die Diamanten auf der Metallschmelz auf und führen nach der Erstarrung zu einem Schneidkörperaufbau mit einem hohen Anteil von Diamantkörnern in Richtung auf die Oberfläche. Solche Schneidkörper sind für den praktischen Einsatz nachteilig, da sie aufgrund der zu hohen Diamantenoberflächenkonzentration zu hart wirken.

Ein Lösung dieses Problems könnte in einer sehr kurzen Erstarrungszeit liegen, was aufwendig wäre und in der Massenfertigung nicht verwirklicht werden kann. Ein anderer Lösungsansatz sieht gemäß der WO 98/15672 vor, daß der Grundkörper während der Erstarrungszeit der Schmelze entgegengesetzt zur Schwerkraftrichtung bewegt wird und die Oberflächennormale des Grundkörpers und die Schwerkraftrichtung einen Winkel von 60° bis 90° einschließen. Abgesehen von der damit einhergehenden Einschränkung der Verfahrenswege verhinder dieser Ansatz insbesondere bei hohen Aufbringungsgeschwindigkeiten von über 150 mm/min und niedrigviskosen Metallschmelzen die Auftriebsbewegung der Diamantkörrier nur unvollständig und die Schmelzbadkonvektion überhaupt nicht.

Aufgabe der vorliegenden Erfindung ist es daher, einen Schneidkörper für Scheidwerkzeuge wie Trennscheiben zu schaffen, bei dem die Verteilung der Hartstoffpartikel optimiert ist und zu dessen Herstellung keine aufwendigen Verfahrens schritte nötig sind.

Diese Aufgabe wird mit den im kennzeichnenden Teils des Anspruchs 1 genannten Merkmalen gelöst. Fortbildungen und vorteilhafte Ausführungen der Erfindung sind in den weiteren Ansprüchen umfaßt.

Erfindungsgemäß ist ein Schneidkörper für Schneidwerkzeuge, wie Trennscheiben und dergleichen, bestehend aus einer durch ein Guß- oder Schmelzsprühverfahren auf einen Bereich des Außenumfangs eines Grundkörpers der Trennscheibe aufgebrachten Metallmatrix, in der Hartstoffpartikel in einer Schmelzlegierung aus einer Bronze mit einem benetzungsfördernden metallischen Mittel eingebunden sind, dadurch gekennzeichnet, daß die Schmelzlegierung einen Anteil von 1 - 40 Gewichtsprozent eines weiteren Metalls oder eines Metalloxydes enthält, dessen Dichte weniger als 10% von der Dichte der übrigen Schmelzlegierung abweicht.
Nach der bevorzugten Ausführung der Erfindung ist das weitere Metall Chrom und das benetzungsfördernde Mittel Titan. Die Hartstoffpartikel bestehen ganz oder teilweise aus Diamant, wobei als weiterer Hartstoffanteil Wolframcarbid vorhanden ist.

Vorzugsweise besteht der Schneidkörper aus
44 - 93 Gew.-% einer Bronze,
5 - 30 Gew.-% Titan,
1.40 Gew.-%, vorzugsweise 4 - 20 Gew.-% Chrom, und
1 - 50 Gew.-% Hartstoffen
besteht.

Der Schneidkörper wird mittels eines Laserstrahls auf einen Grundkörper aus Stahl aufgeschmolzen, wobei zwischen dem Schneidkörper und dem Grundkörper vorteilhafterweise eine metallische Zwischenschicht ohne einen Anteil eines benetzungsfördernden metallischen Mittels angeordnet ist.

Ein Verfahren zum Herstellen von Schneidkörpem auf Schneidwerkzeugen nach einem der vorhergehenden Ansprüche ist durch die Schritte gekennzeichnet:
- Bereitstellen eines Grundkörpers in einer Kokille und ggf. Aufbringen einer metallischen Zwischenschicht durch Aufschmelzen mittels eines Laserstrahls,
- Mischen der als Pulver vorliegenden Bestandteile des Schneidkörpers:
- Aufbringen der Mischung und Aufschmelzen der Mischung mittels eines Laserstrahls.

Das Chrompulver wird zusammen mit dem Bronze-Titanpulver aufgeschmolzen und zusammen mit den Diamantkörnern auf den Stahlgrundkörper aufgesprüht. Bei der sofort einsetzenden Abkühlung der Schmelze fallen kleine, feinverteilte Chromprimärkristalle in der Schmelze aus. Da die Dichte von festem Chrom mit 7,2 g/cm³ in etwa der Schmelzendichte entspricht, kommt es weder zu einer Auftriebs- noch Absetzbewegung der sich ausscheidenden Chrompartikel. Durch den mit zunehmender Abkühlung zunehmenden Chrom-Feststoffanteil kommt es zu einer deutlichen Erhöhung der Schmelzenviskosität, wodurch die Auftriebs- und Konvektionsbewegung der Diamantkörner erschwert wird. Darüber hinaus kommt es bei zunehmender Ausscheidung der sehr feinen Chromprimärkristalle (typischerweise < 5 µ) zu einer Netzwerkausbildung, die ebenfalls die Auftriebs- und Konvektionsbewegung der Diamanten behindert.

Nach vollständiger Erstarrung der gesamten Schmelze liegt in einem Verbund aus Chrompartikelnetzwerk und Kupfer-Zinn-Titan-Grundbindung eine weitgehend gleichmäßige Diamantkörnerverteilung vor. Wie in Tests festgestellt wurde, beeinflußt das feinverteilte Chrompartikelnetzwerk das Schneid- oder Verschleißverhalten der Schneidkörper in keiner Weise negativ.

Im folgenden werden beispielhaft einige Mischungsrezepturen für die Schneidkörper aufgeführt:

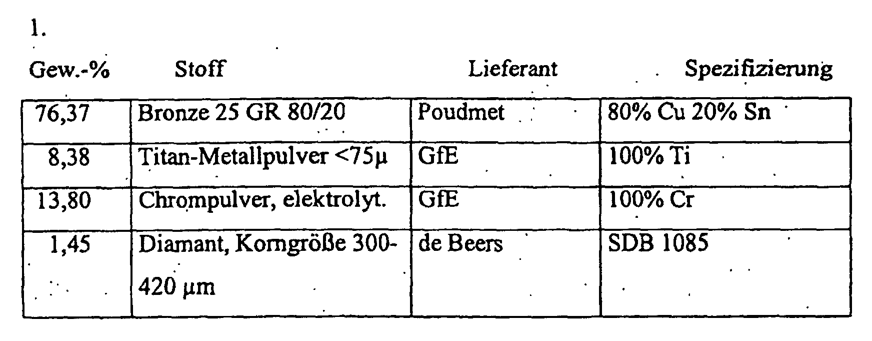

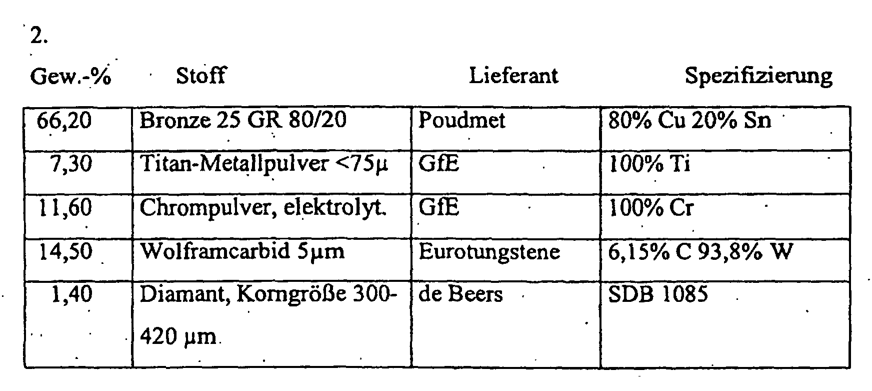

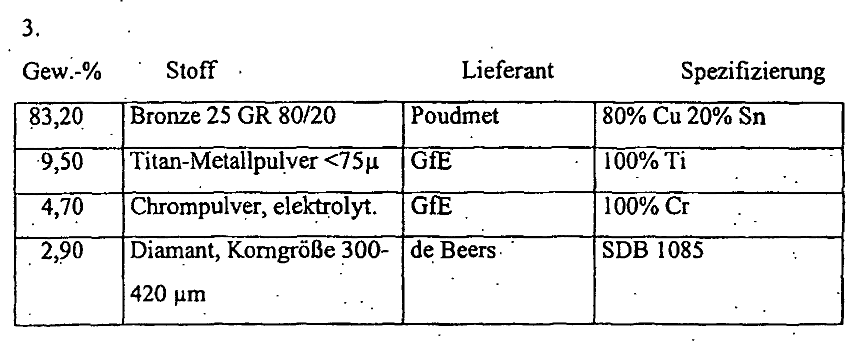

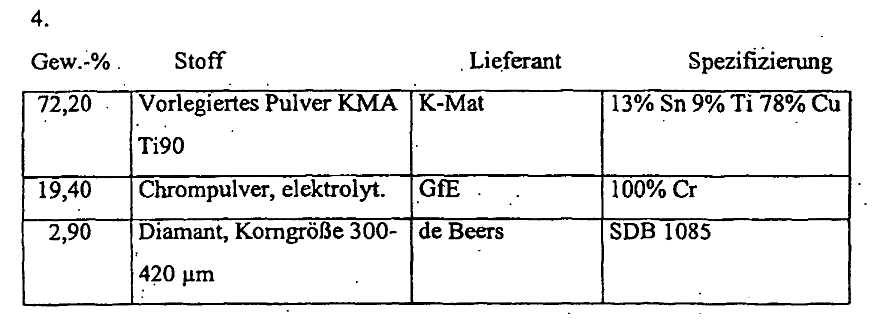

## Patentansprüche

1. Schneidkörper für Schneidwerkzeuge, wie Trennscheiben, Bohrkronen Schleifwerkzeuge und dergleichen, bestehend aus einer durch ein Guß- oder Schmelzsprühverfahren auf einen Bereich des Außenumfangs eines Grundkörpers der Trennscheibe aufgebrachten Metallmatrix, in der Hartstoffpartikel in einer Schmelzlegierung aus einer Bronze mit einem benetzungsfördernden metallischen Mittel eingebunden sind,
**dadurch gekennzeichnet,**
**daß** die Schmelzlegierung einen Anteil von 1 - 40 Gewichtsprozent eines weiteren Metalls oder eines Metalloxydes enthält, dessen Dichte weniger als 10% von der Dichte der übrigen Schmelzlegierung abweicht.

2. Schneidkörper nach Anspruch 1,
**dadurch gekennzeichnet,**
**daß** das weitere Metall Chrom ist.

3. Schneidkörper nach Anspruch 1 oder 2,
**dadurch gekennzeichnet,**
**daß** das benetzungsfördernde Mittel Titan ist.

4. Schneidkörper nach Anspruch 2 und 3,
**dadurch gekennzeichnet,**
**daß** die Hartstoffpartikel ganz oder teilweise aus Diamant bestehen.

5. Schneidkörper nach Anspruch 4,
**dadurch gekennzeichnet,**
**daß** als weiterer Hartstoffanteil Wolframcarbid vorhanden ist.

6. Schneidkörper nach Anspruch 4 oder 5,
**dadurch gekennzeichnet,**
**daß** der Schneidkörper aus
44 - 93 Gew.-% einer Bronze,
5 - 30 Gew.-% Titan,
1. 40 Gew.-% Chrom, und
1 - 50 Gew.-% Hartstoffen
besteht.

7. Schneidkörper nach Anspruch 5,
**dadurch gekennzeichnet,**
**daß** der Anteil an Chrom zwischen 4 und 20 Gewichtsprozent beträgt.

8. Schneidkörper nach einem der vorhergehenden Ansprüche,
**dadurch gekennzeichnet,**
**daß** der Schneidkörper mittels eines Laserstrahls aufgeschmolzen ist.

9. Schneidkörper nach einem der vorhergehenen Ansprüche,
**dadurch gekennzeichnet,**
**daß** der Grundkörper aus Stahl besteht.

10. Schneidkörper nach einem der vorhergehenden Ansprüche,
**dadurch gekennzeichnet,**
**daß** zwischen dem Schneidkörper und dem Grundkörper eine metallische Zwischenschicht ohne einen Anteil eines benetzungsfördernden metallischen Mittels angeordnet ist.

11. Verfahren zum Herstellen von Schneidkörpern auf Schneidwerkzeugen nach einem der vorhergehenden Ansprüche, **gekennzeichnet durch** die Schritte:
- Bereitstellen eines Grundkörpers in einer Kokille und ggf. Aufbringen einer metallischen Zwischenschicht **durch** Aufschmelzen mittels eines Laserstrahls,
- Mischen der als Pulver vorliegenden Bestandteile des Schneidkörpers:
- Aufbringen der Mischung und Aufschmelzen der Mischung mittels eines Laserstrahls.

## Claims

1. Cutting body for cutting tools, such as cut-off wheels, drill bits, grinding tools and the like, consisting of a metal matrix which has been applied by a casting or melt-spraying process to a region of the outer circumference of a base body for the cut-off wheel and in which hard-material particles are included in a melt alloy comprising a bronze with a wetting-promoting metallic agent, **characterized in that** the melt alloy contains from 1-40% by weight of a further metal or a metal oxide, the density of which differs by less than 10% from the density of the remainder of the melt alloy.

2. Cutting body according to Claim 1, **characterized in that** the further metal is chromium.

3. Cutting body according to Claim 1 or 2, **characterized in that** the wetting-promoting agent is titanium.

4. Cutting body according to Claims 2 and 3, **characterized in that** the hard-material particles consist partially or completely of diamond.

5. Cutting body according to Claim 4, **characterized in that** tungsten carbide is present as a further hard-material fraction.

6. Cutting body according to Claim 4 or 5, **characterized in that** the cutting body consists of
44 - 93% by weight of a bronze,
5 - 30% by weight of titanium,
1 - 40% by weight of chromium, and
1 - 50% by weight of hard materials.

7. Cutting body according to Claim 5, **characterized in that** the chromium content is between 4 and 20 per cent by weight.

8. Cutting body according to one of the preceding claims, **characterized in that** the cutting body is melted by means of a laser beam.

9. Cutting body according to one of the preceding claims, **characterized in that** the base body consists of steel.

10. Cutting body according to one of the preceding claims, **characterized in that** a metallic interlayer which does not contain a wetting-promoting metallic agent is arranged between the cutting body and the base body.

11. Process for producing cutting bodies on cutting tools according to one of the preceding claims, **characterized by** the steps of:
- providing a base body in a permanent mould and if appropriate applying a metallic interlayer by melting by means of a laser beam,
- mixing the constituents of the cutting body, which are in powder form;
- applying the mixture and melting the mixture by means of a laser beam.

## Revendications

1. Elément coupant pour des outils de coupe tels que des disques, des trépans, des outils de meulage ou analogues, composé d'une matrice métallique appliquée par un procédé de coulée ou de pulvérisation-fusion sur une zone de la périphérie extérieure du corps de base d'un disque, matrice dans laquelle sont intégrées des particules de matière dure dans un alliage fusible de bronze avec un agent métallique favorisant le mouillage,
**caractérisé en ce que**
l'alliage de fusion se compose de 1-40 % en poids d'un autre métal ou d'un oxyde métallique dont la densité diffère de moins de 10 % de celle du restant de l'alliage fusible.

2. Elément coupant selon la revendication 1,
**caractérisé en ce que**
l'autre métal est du chrome.

3. Elément coupant selon la revendication 1 ou 2,
**caractérisé en ce que**
l'agent favorisant le mouillage est du titane.

4. Elément coupant selon les revendications 2 et 3,
**caractérisé en ce que**
les particules de matière solide sont en totalité ou en partie formées de diamant.

5. Elément coupant selon la revendication 4,
**caractérisé en ce que**
l'autre composant de matière dure est du carbure de tungstène.

6. Elément coupant selon la revendication 4 ou 5,
**caractérisé en ce que**
l'organe de coupe se compose de
44-93 % en poids de bronze,
5-30 % en poids de titane,
1,40 % en poids de chrome, et
1-50 % en poids de matière dure.

7. Elément coupant selon la revendication 5,
**caractérisé en ce que**
la teneur en chrome est comprise entre 4 et 20 % en poids.

8. Elément coupant selon l'une des revendications précédentes,
**caractérisé en ce que**
l'élément coupant est fondu par un faisceau laser.

9. Elément coupant selon l'une des revendications précédentes,
**caractérisé en ce que**
le corps de base est en acier.

10. Elément coupant selon l'une des revendications précédentes,
**caractérisé en ce qu'**
entre le corps de coupe et le corps de base se trouve une couche intermédiaire métallique ne contenant pas de partie d'un agent métallique favorisant le mouillage.

11. Procédé de fabrication d'éléments coupants pour des outils de coupe selon l'une des revendications 1 à 10,
**caractérisé en ce qu'**
- on réalise un corps de base dans une coquille et le cas échéant en appliquant une couche intermédiaire métallique par fusion à l'aide d'un faisceau laser,
- on mélange le composant existant à l'état de poudre de l'organe de coupe,
- on applique le mélange et on le fait fondre à l'aide d'un faisceau laser.
